# FASCICULE DE BREVET EUROPEEN

(11) **EP 2 717 108 B1**
(45) Date de publication et mention de la délivrance du brevet: **04.03.2015**
(21) Numéro de dépôt: 13187212.9
(22) Date de dépôt: 03.10.2013
(51) Int. Cl.: G05D 1/00, B64C 13/50

(54) **Système de commande de vol utilisant des calculateurs simplex et aéronef le comportant**
Flugsteuerungssystem, das Simplex-Rechner benutzt, und damit ausgerüstetes Luftfahrzeug
Flight control system using simplex computers and aircraft comprising it

(30) Priorité: 05.10.2012 FR 1259507
(43) Date de publication de la demande: 09.04.2014
(73) Titulaire: AIRBUS OPERATIONS (S.A.S), 31060 Toulouse (FR)
(72) Inventeur: Brot, Patrice, 31520 Ramonville-Saint-Agne (FR); Devineau, Sylvain, 31200 Toulouse (FR)
(74) Mandataire: Sarraméa, Claude

(56) Documents cités:
- WO-A2-2008/122820
- US-A1- 2007 083 301
- US-A1- 2008 022 151
- US-A1- 2009 012 657
- US-A1- 2011 276 199
- US-B1- 8 015 390

## Description

La présente invention concerne les systèmes de commande de vol (Flight Control Systems) présents dans les aéronefs.

Ces systèmes de commande de vol sont à l'interface entre les organes de pilotage (manche, palonnier, etc.) et les diverses surfaces de vol mobiles de l'aéronef (tels que les gouvernes de direction, de profondeur, les ailerons, les stabilisateurs, etc.).

Les avions de ligne modernes possèdent des systèmes de commande de vol de type « fly by wire » dans lesquels les actions mécaniques sur les organes de pilotage sont converties en des signaux transmis à des actionneurs commandant le déplacement des surfaces de vol, ces ordres étant transmis aux actionneurs par des calculateurs évolués.

Ces ordres sont calculés selon plusieurs types de lois de vol. L'une de ces lois, appelée loi normale, est une loi de pilotage assistée qui retraite les consignes de pilotage fournies par les organes de pilotage pour optimiser les conditions de pilotage (confort des passagers, stabilisation de l'avion, protection du domaine de vol, etc.). Une autre loi, dite loi directe, est une loi qui ne fait que retranscrire les instructions de déplacement de l'avion transmises par les commandes de vol électriques sans retraitement de ces signaux visant à améliorer les performances de pilotage.

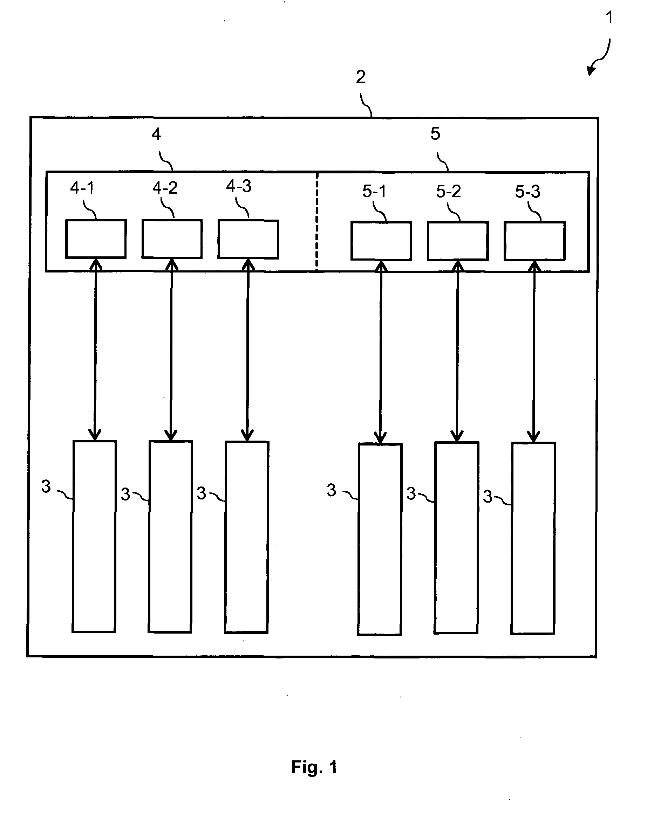

On connaît déjà, comme illustré sur la figure 1, un système de commande de vol 1 comportant un module de commande 2 présentant deux ensembles de calculateurs 4 et 5 afin de déterminer les ordres de commande à transmettre à des actionneurs 3. Ces calculateurs sont des calculateurs duplex, c'est-à-dire qu'ils comportent deux unités de calcul, une unité fonctionnant en mode commande tandis que la seconde effectue typiquement les mêmes calculs en mode moniteur.

L'ensemble 4 comporte deux calculateurs 4-1 et 4-2 en mesure de calculer la commande des actionneurs 3 établie selon les lois de commande normale et directe (ces calculateurs sont appelés calculateurs primaires) et un calculateur 4-3 uniquement en mesure de calculer cette commande établie selon la loi directe (ce calculateur est appelé calculateur secondaire).

L'ensemble 5 comporte un calculateur primaire 5-1 et deux calculateurs secondaires 5-2 et 5-3.

Tous ces calculateurs sont installés en baie avionique et communiquent avec les actionneurs via des liaisons directes point à point analogiques.

Les actionneurs sont reliés à un ou deux calculateurs, avec dans le cas de deux calculateurs une architecture « maître/attente », le calculateur maître s'assure de la validité du signal de commande transmis à l'actionneur ce qui assure l'intégrité du dispositif. Lorsque le calculateur maître tombe en panne, le calculateur « en attente » prend le relais ce qui assure qu'un calculateur est toujours disponible.

Pour s'assurer de la validité de son ordre, chaque calculateur présente une structure à double unité de calculs (il s'agit de calculateurs double-voie encore appelés calculateurs « duplex »), non illustrée sur la figure 1.

La première unité est une unité de commande (COM) qui met en oeuvre les traitements nécessaires à la réalisation des fonctions du calculateur, à savoir déterminer un signal de commande vers un actionneur.

La seconde unité est une unité de surveillance ou de monitorage (MON) qui effectue de son côté les mêmes types d'opérations, les valeurs obtenues par chaque unité étant ensuite comparées et, s'il y a un écart qui dépasse le seuil de tolérance autorisé, le calculateur est automatiquement désactivé. Il devient alors inopérant et est déclaré en panne pour qu'un autre calculateur puisse s'y substituer pour mettre en oeuvre les fonctions délaissées par ce calculateur en panne.

Chaque calculateur est ainsi prévu pour détecter ses propres pannes et inhiber les sorties correspondantes tout en signalant son état.

Le matériel des calculateurs primaires et secondaires est différent de façon à minimiser les risques de défaillance simultanée de l'ensemble des calculateurs (dissimilarité matérielle).

De plus, le matériel des deux voies, commande et moniteur ou COM/MON, de chaque calculateur est identique mais pour des raisons de sécurité, les logiciels de ces deux voies sont différents de façon à assurer une dissimilarité logicielle.

Le document US2011/276199 décrit un système de commande de vol tel que précité, dans lequel chaque calculateur comporte une unité de commande COM et une unité de monitorage MON.

L'invention vise à fournir un système de commande de vol qui présente une architecture modifiée par rapport à celle de l'art antérieure décrite ci-dessus, à la fois moins coûteuse en ressources matérielles et logicielles tout en répondant aux mêmes exigences de sécurité et de disponibilité que le système de l'art antérieur.

L'invention a ainsi pour objet un calculateur pour le calcul de commandes de vol au sein d'un système de commande de vol, qui comporte au moins un logiciel pour le calcul de commandes de vol selon au moins une loi de vol à partir d'au moins une commande reçue d'au moins un organe de pilotage; des moyens de communication avec au moins deux autres calculateurs associés du même type ; des moyens de calcul d'un premier ordre de vol, destiné à un contrôleur distant d'un actionneur de gouverne, en mode commande au sein d'un premier couple commande/moniteur virtuel constitué dudit calculateur et d'un des deux calculateurs associés agissant en mode moniteur pour le compte dudit premier couple commande/moniteur virtuel et des moyens de calcul d'un second ordre de vol, destiné à un contrôleur distant d'un actionneur de gouverne, en mode moniteur au sein d'un second couple commande/moniteur virtuel constitué dudit calculateur et de l'autre calculateur associé agissant en mode commande pour le compte dudit second couple commande/moniteur virtuel.

Selon un mode particulier de l'invention, le calculateur comporte en outre des moyens de vérification de la validité des couples commande/moniteur virtuels selon les critères suivants : les commandes calculées par les deux calculateurs du couple sont disponibles et calculées selon la même loi de vol et la différence en valeur absolue entre les deux commandes calculées est inférieure à un seuil de tolérance donné.

Selon un mode particulier de l'invention, les moyens de vérification de la validité des couples commande/moniteur virtuels vérifient en outre le critère suivant : les deux calculateurs implémentent un logiciel différent pour le calcul des commandes.

Selon un mode particulier de l'invention, le calculateur comporte en outre : des moyens pour transmettre à tous les autres calculateurs du système, et pour chacun des couples auxquels il participe, son information de validité du couple.

Selon un mode particulier de l'invention, le calculateur comporte en outre des moyens pour élire un couple maître parmi l'ensemble des calculateurs participant au système de commande de vol.

Selon un mode particulier de l'invention, le couple élu maître est le premier couple valide, c'est-à-dire déterminé comme valide par les deux calculateurs du couple, dans une liste de tous les couples du système rangée selon un ordre de priorité.

Selon un mode particulier de l'invention, le calculateur comporte en outre des moyens pour sélectionner un niveau de loi de vol pour le couple comme étant le niveau de loi le plus dégradé des meilleurs niveaux de loi dont sont capables les deux calculateurs du couple.

Selon un mode particulier de l'invention, le calculateur comporte en outre des moyens pour transmettre le niveau de loi sélectionné pour chacun des couples auxquels il participe à tous les calculateurs et où les moyens d'élection sont adaptés pour élire comme couple maître le premier couple ayant la loi la moins dégradée dans une liste de tous les couples du système rangée selon un ordre de priorité.

Selon un mode particulier de l'invention, le calculateur comporte en outre des moyens de reconfiguration logicielle pour basculer d'un premier logiciel à un second logiciel différent pour le calcul des commandes de vol.

Selon un mode particulier de l'invention, le calculateur comporte en outre, s'il est le calculateur agissant en mode commande du couple élu maître, des moyens de transmettre les commandes calculées à l'ensemble des calculateurs et des moyens pour retransmettre à destination du contrôleur distant contrôlant un actionneur, les commandes reçues calculées par le calculateur agissant en mode commande du couple élu maître.

Selon un mode particulier de l'invention, le calculateur comporte en outre, s'il est le calculateur agissant en mode commande du couple élu maître, des moyens de transmettre la sortie d'un intégrateur utilisé pour le calcul de la loi normale et des moyens pour synchroniser les intégrateurs utilisés pour le calcul de la loi normale en mode commande pour un couple non élu maître ou en mode moniteur sur la valeur de l'intégrateur du calculateur agissant en mode commande du couple élu maître.

L'invention a également pour objet un système de commande de vol selon la revendication 12.

L'invention a également pour objet un avion caractérisé en ce qu'il comporte un système de commande de vol selon l'invention.

D'autres avantages, buts et caractéristiques de la présente invention ressortent de la description détaillée qui suit, faite à titre d'exemple non limitatif, au regard des dessins annexés dans lesquels :
la figure 1 illustre une architecture de commandes de vol selon l'art antérieur ;
la figure 2 illustre l'architecture d'un calculateur duplex commande/moniteur selon l'art antérieur ;
la figure 3 présente un exemple de réalisation d'une architecture de commande de vol selon l'invention ;
la figure 4 illustre une méthode connue de synchronisation des intégrateurs.

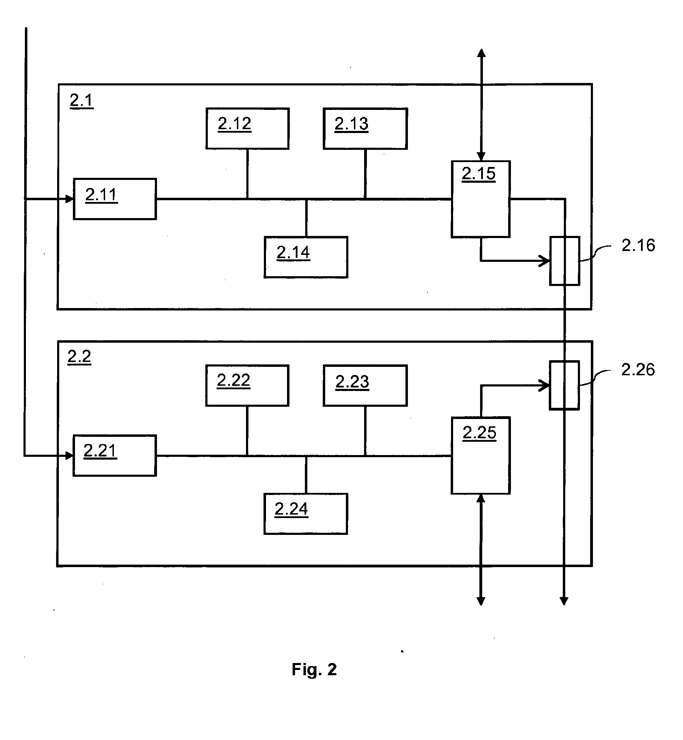

L'architecture d'un calculateur duplex, c'est-à-dire composé de deux unités de calcul, fonctionnant en mode commande/moniteur est illustré par la **Figure 2**. La première unité 2.1 est l'unité de commande, tandis que la seconde unité 2.2 est l'unité de monitorage. Ces deux unités sont basées sur un même matériel. Ce matériel est typiquement composé d'une alimentation électrique 2.11, 2.21 recevant l'énergie nécessaire à son fonctionnement. Un bus de communication permet l'échange de données entre un processeur 2.12, 2.22 chargé des calculs et une mémoire de travail 2.13, 2.23. Cette mémoire permet d'une part de stocker les programmes réalisant les différentes fonctions de calcul nécessaires, typiquement les fonctions implémentant les diverses lois, loi normale, loi alternative (*alternate* en anglais) et/ou loi directe utilisées pour contrôler les surfaces de vol. Un module d'entrée sortie 2.15, 2.25 permet d'échanger des données avec les autres calculateurs. Il permet également de recevoir les données, typiquement de position, en provenance des gouvernes et les consignes issues des organes de pilotage. Un chien de garde (*watchdog* en anglais) permet de sortir d'un blocage logiciel par une réinitialisation de l'unité. L'unité de sortie permet également d'envoyer le résultat d'une commande à l'actionneur d'une gouverne. Cet envoi est contrôlé par les relais 2.16 et 2.26 qui permettent de bloquer l'envoi de commande lorsque le calculateur est déterminé comme non fonctionnel.

Ce calculateur fonctionne selon le principe suivant. L'unité de commande réalise le calcul des commandes à envoyer à une gouverne en fonction des consignes reçues provenant des organes de pilotage. Ce calcul est réalisé selon la loi active pour le calculateur. L'unité de monitorage associée réalise le même calcul à partir des mêmes données en utilisant la même loi. Le calcul est réalisé par un logiciel différent implémentant la même loi pour respecter le principe de dissimilarité logicielle. La commande calculée doit donc être la même dans les limites des erreurs d'arrondi ou autres divergences mineures introduite par l'usage de deux logiciels différents. Le résultat obtenu par l'unité de commande et celui obtenu par l'unité de monitorage sont donc comparées et leur différence est testée contre un seuil de tolérance. Si la différence est supérieure à ce seuil de tolérance, le calculateur est déclaré non fonctionnel et ses sorties sont désactivées. Un autre calculateur fonctionnant selon le même principe est alors activé pour reprendre le contrôle de la gouverne. On constate que les deux unités du calculateur se trouvent désactivées alors que la panne n'affecte le plus souvent qu'une de ces deux unités. La disponibilité du système est assurée par la redondance des calculateurs impliquant une redondance élevée en unités de calcul.

L'architecture proposée est basée sur un ensemble de calculateurs de commande de vol, ou FCC, du type simplex, c'est-à-dire composés d'une seule unité de traitement et non plus de deux unités de traitement. Ces calculateurs permettent le contrôle d'actionneurs agissants sur les gouvernes. Ces actionneurs sont contrôlés localement par une unité de contrôle appelée FCRM (*Flight Control Remote Module* en anglais). Ces FCRM sont architecturés selon le modèle commande/moniteur décrit plus haut. Ils sont donc constitués d'une unité de commande et d'une unité de monitorage. L'unité de commande contrôle physiquement l'actionneur. Le moniteur duplique les calculs faits par l'unité de commande. Les résultats des deux unités sont comparés et en cas de divergence, l'actionneur est désactivé. Typiquement on force dans ce cas un mode de fonctionnement amorti de l'actionneur. Dans ce mode, l'actionneur joue le rôle d'un amortisseur passif sur la gouverne. Ces contrôleurs distants sont impliqués dans la logique de commande et nécessitent donc cette redondance pour assurer le niveau de sécurité requis.

La communication entre les calculateurs et les actionneurs est assurée par des bus de données numériques. On peut utiliser, par exemple, des bus du type AFDX (*Avionics Full DupleX switched ethernet* en anglais) qui est un bus développé par des industriels européen de l'avionique pour Airbus ou MIL-STD-1553 utilisé dans l'avionique militaire. Avantageusement, chaque calculateur est relié par un tel bus, ou un ensemble de tels bus, à chaque actionneur.

Certains des calculateurs sont dotés de fonctions évoluées, typiquement ils sont capables de calculer les commandes de gouverne conformément à l'ensemble des lois de vol disponibles. Ces calculateurs sont qualifiés de calculateurs primaires. Ils sont utilisés en priorité. D'autres calculateurs sont dotés de fonctions plus simples, typiquement ils ne sont capables que de la loi directe où les consignes reçues des organes de pilotage sont transmises directement aux actionneurs. Ces calculateurs sont qualifiés de secondaires et sont typiquement utilisés lorsque tout ou partie des calculateurs primaires sont non fonctionnels. Avantageusement, les différents calculateurs primaires sont dotés de logiciels différents assurant les mêmes fonctions pour réaliser la dissimilarité logicielle du système. Les calculateurs secondaires peuvent être dotés d'un même logiciel qui sera toutefois avantageusement dissimilaire du logiciel utilisé par les calculateurs primaires.

La sécurité apportée dans l'art antérieur par l'utilisation de calculateurs duplex commande/moniteur est apportée dans l'architecture proposée par la définition de couples de calculateurs logique utilisés en mode commande/moniteur. Typiquement chaque calculateur participe à deux couples commande/moniteur. Pour l'un des couples il agit en mode commande. Pour l'autre couple, il agit en mode moniteur. On réalise ainsi typiquement autant de couples commande/moniteur que de calculateurs impliqués. Chaque calcul est alors effectué deux fois par chaque calculateur, une première fois en mode commande pour le compte du premier couple commande/moniteur et une seconde fois en mode moniteur pour le second couple commande/moniteur. Ce faisant, la panne d'un calculateur invalide les couples commande/moniteur auxquels il participe, mais les autres calculateurs continuent à être actifs et utilisés au sein des couples commande/moniteur restants. Au contraire de l'art antérieur où la panne d'une unité d'un calculateur duplex entraînait la désactivation du calculateur entier et donc de la seconde unité.

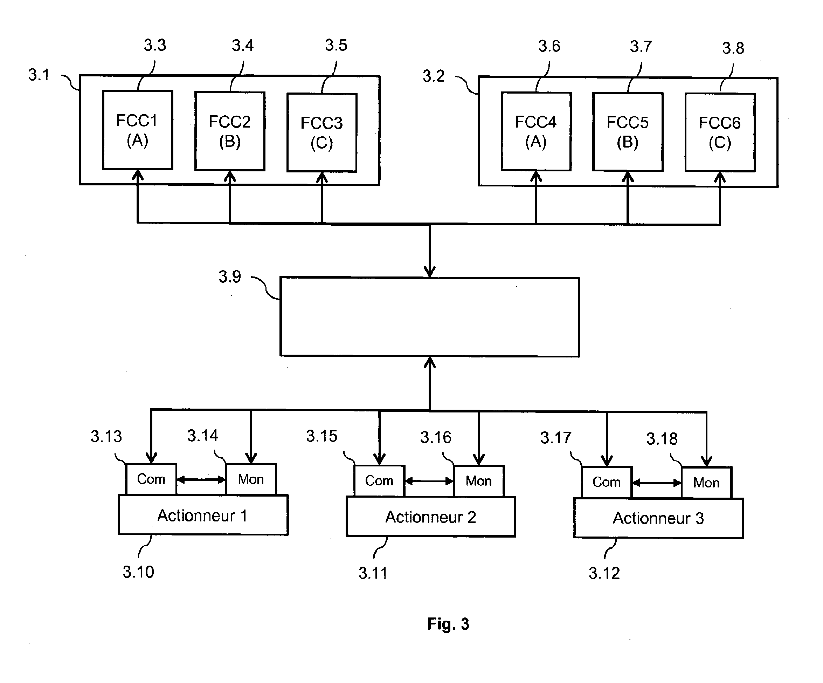

Un exemple de réalisation de l'invention est maintenant décrit en relation avec la **Figure 3**. Dans cet exemple, les calculateurs sont répartis en deux groupes 3.1 et 3.2. Chaque groupe est constitué de deux calculateurs primaires 3.3, 3.4, 3.6 et 3.7 et d'un calculateur secondaire 3.5 et 3.8. Le logiciel utilisé par chaque calculateur est symbolisé par la lettre entre parenthèse. Les calculateurs primaires 3.3 et 3.6 exécutent un premier logiciel, nommé 'A', qui implémente l'ensemble des lois disponibles. Les calculateurs primaires 3.4 et 3.7 exécutent un second logiciel, nommé 'B', qui implémente également l'ensemble des lois disponibles. Les calculateurs secondaires 3.5 et 3.8 exécutent un troisième logiciel, nommé 'C' qui n'implémente que la loi directe.

Chaque actionneur, 3.10, 3.11 et 3.12 est contrôlé par une unité de contrôle distant constituée par une unité commande 3.13, 3.15 et 3.17 et une unité moniteur 3.14, 3.16 et 3.18. Chacune de ces unités de contrôle est connectée à chacun des calculateurs par un bus avantageusement dupliqué 3.9 constitué d'un bus AFDX ou d'un bus MIL-STD-1553.

Le rôle des calculateurs est de calculer les commandes à envoyer aux gouvernes à partir des informations reçues des organes de pilotage et des paramètres de vol courant. Ce calcul obéit à une loi parmi un ensemble de lois possibles. Par défaut, le calcul est effectuée selon une loi appelée loi normale. Les autres lois sont implémentées pour faire face à une dégradation des informations disponibles, par exemple en cas de perte de certains paramètres de vol à la suite de pannes éventuelles des appareils fournissant ses paramètres. Une succession de lois sont donc implémentées pour pallier à une dégradation de plus en plus importante des paramètres disponibles. En dernier recours, une loi dite directe transmet les commandes obtenues des organes de pilotage directement aux actionneurs, le pilotage étant alors entièrement contrôlé par le pilote sans modification.

Les quatre calculateurs primaires de l'exemple de réalisation sont organisés pour former quatre couples commande/moniteur. Ces quatre couples sont dans l'exemple les couples (FCC1, FCC5), (FCC2, FCC1), (FCC4, FCC2) et (FCC5, FCC4). Le premier calculateur du couple agissant en mode commande et le second en mode moniteur. On constate que chaque calculateur participe à deux couples, une fois en tant qu'unité de commande et une fois en tant qu'unité de monitorage. On constate également que les unités de commande et de monitorage de chaque couple réalisent bien la dissimilarité logicielle. Les calculateurs secondaires forment un couple commande/moniteur particulier le couple (FCC3, FCC6). Chaque couple de calculateur peut être vu comme un calculateur duplex commande/moniteur virtuel. Ces couples sont donnés à titre d'exemples, d'autres couples peuvent être formés par permutation et en fonction du nombre de calculateurs implémentés dans une solution particulière.

Chaque couple dispose avantageusement d'un état de validité calculé par chaque calculateur du couple. Selon l'exemple de réalisation, un calculateur du couple détermine la validité de ce couple selon les critères suivants :
- L'autre calculateur est perçu comme valide.
- Les deux calculateurs implémentent un logiciel différent.
- Les commandes calculées par les deux calculateurs sont disponibles et calculées selon la même loi de vol.
- La différence en valeur absolue entre les deux commandes calculées est inférieure au seuil de tolérance.

Avantageusement, chaque calculateur transmet à tous les autres calculateurs et pour chacun des couples auxquels il participe, son information de validité du couple et les commandes calculées pour ce couple. Ainsi, chaque calculateur est informé de l'état de validité des autres calculateurs.

Avantageusement, un couple est élu maître. Ce sont les commandes de ce couple maître qui seront normalement prisent en compte pour le contrôle de l'actionneur. Cette élection est réalisée par chacun des calculateurs selon un procédé d'élection aboutissant normalement à l'élection d'un même couple maître par chacun des calculateurs. Il peut en être différemment dans certains cas de panne. Pour ce faire, un ordre de priorité est avantageusement déterminé dans l'ensemble des couples. Par exemple, les couples reçoivent une priorité décroissante dans l'ordre (FCC1, FCC5), (FCC2, FCC1), (FCC4, FCC2) et (FCC5, FCC4). Le couple maître est déterminé, par exemple, comme le premier de ces couples qui est valide. Par couple valide, on entend un couple dont les deux membres ont déterminé que le couple est valide. Si aucun de ces couples n'est valide, le couple de calculateurs secondaires (FCC3, FCC6) est déclaré maître s'il est valide. Ceci apporte l'avantage que tous les calculateurs valides ont la même vision du système.

Normalement tous les calculateurs élisent le même couple maître. Toutefois, certaines configurations de pannes peuvent conduire à une hétérogénéité dans le résultat de l'élection. Les contrôleurs distants qui reçoivent le résultat de l'élection calculé par le couple élu, de la part de tous les calculateurs doivent donc être en mesure de déterminer un couple de calculateur commande/moniteur parmi les couples élus, potentiellement différents, qu'ils reçoivent des différents calculateurs. Pour ce faire, par exemple, chaque unité de contrôleur distant sélectionne le couple maître le plus souvent cité parmi les couples maîtres élus qu'il reçoit de la part des différents calculateurs. Si plusieurs couples sont cités autant de fois, on choisi par ordre de priorité selon l'ordre déjà défini (FCC1, FCC5), (FCC2, FCC1), (FCC4, FCC2), (FCC5, FCC4) et finalement le couple (FCC3, FCC6). Lorsqu'aucun calculateur ne valide de couple commande/moniteur, le contrôleur distant sélectionne dans l'ordre le FCC3 s'il est valide puis le FCC6 s'il est valide. La loi directe est alors appliquée. L'unité commande du contrôleur distant applique alors la commande calculée par le calculateur commande du couple sélectionnée et reçue de celui-ci à l'actionneur qu'il contrôle.

Chaque calculateur est à même de réaliser un ensemble de loi de vol allant de la loi normale exécutée lorsque tous les paramètres de vol sont disponibles à la loi la plus dégradée, la loi directe. Il peut arriver que les deux calculateurs d'un couple commande/moniteur ne sélectionnent pas le même niveau de loi dans certains cas dégradés. Avantageusement, les calculateurs d'un même couple commande/moniteur s'échangent le meilleur niveau de loi dont ils sont capables dans leur environnement courant. Le niveau de loi sélectionné pour le couple est le niveau de loi le plus dégradé des deux. Chaque calculateur s'accorde pour calculer les commandes de vol à l'aide de cette loi sélectionnée pour le couple. Un même calculateur peut alors être amené à calculer une commande de gouverne selon une première loi pour un premier couple et selon une seconde loi pour un second couple en fonction des lois sélectionnées dans chaque couple.

Avantageusement, les calculateurs échangent entre eux le niveau de loi sélectionné pour chacun des couples. La sélection du couple de calculateur maître est alors modifiée de la façon suivante. Un score est attribué à chaque couple en fonction du niveau de loi sélectionné pour ce couple. Ce score est décroissant pour des niveaux de loi de plus en plus dégradé. Ce score est ensuite augmenté d'une valeur dépendante de l'ordre de priorité déjà défini pour départager des scores équivalents. Le couple maître sélectionné est alors le couple obtenant le meilleur score. Dans l'exemple de réalisation un score de 30 est attribué à un calculateur pouvant fonctionner selon la loi normale, un score de 20 pour ceux pouvant fonctionner selon la loi dite alternative 1, un score de 10 pour la loi alternative 2 et un score de 0 pour la loi directe. Ce score est augmenté d'une valeur de 6 pour le couple (FCC1, FCC5), de 5 pour le couple (FCC2, FCC1), de 4 pour le couple (FCC4, FCC2) et de 3 pour le couple (FCC5, FCC4). Ainsi on sélectionne le couple maître le plus prioritaire parmi les couples ayant sélectionné la loi la moins dégradée. On sélectionne donc toujours un calcul des commandes selon la loi la moins dégradée disponible.

Lorsque tous les calculateurs primaires utilisant le même logiciel sont non fonctionnels, il n'est plus possible de former de couples commande/moniteur à l'aide des calculateurs primaires restant, du moins en respectant la contrainte de la dissimilarité logicielle. Avantageusement, au moins certains calculateurs sont dotés de moyens de reconfiguration logicielle. Ces calculateurs embarquent les deux versions de logiciels et sont capable de fonctionner selon l'un ou l'autre. La bascule pouvant être provoquée par ces moyens de reconfiguration. Lorsque seuls des calculateurs primaires basés sur le même type de logiciel sont valides, la reconfiguration de certains d'entre eux pour utiliser la version alternative de logiciel permet de reconstituer des couples commande/moniteur respectant la contrainte de dissimilarité logicielle. Dans l'exemple de réalisation, les FCC2 et FCC4 sont ainsi dotés de moyens de reconfiguration. Ce choix est arbitraire. Ainsi, on retarde le moment où l'on doit passer sur les calculateurs secondaires et utiliser la loi directe.

Suite à une panne spécifique de câblage, il est possible qu'un contrôleur distant identifie correctement le calculateur maître, mais que la communication avec ce dernier soit perdue. Avantageusement les calculateurs disposent d'une fonction de passerelle. Cette fonction implique que la commande calculée par le calculateur maître soit envoyée à tous les autres calculateurs. Ceux-ci retransmettent tous la commande reçue à destination des contrôleurs distants. Ainsi on réalise une redondance dans la transmission des commandes calculées par le calculateur maître et on minimise le risque de non réception de ces commandes par les contrôleurs distants. Avantageusement, pour diminuer le risque d'utilisation d'une commande erronée du fait d'un problème de fonctionnement de cette fonction passerelle, lorsque la communication avec le calculateur maître est perdue, on sélectionne la valeur médiane des valeurs de commande reçues via la fonctionnalité passerelle. Avantageusement, lorsque l'on dispose de deux informations de commande ou moins via la fonctionnalité de passerelle, on considère que l'information n'est pas disponible et l'on invalide l'actionneur qui passe en mode amorti.

Les contrôleurs distants étant conçus selon une architecture commande/moniteur, avantageusement les différents calculs et sélections faites par ces contrôleurs selon les modes de réalisation de l'invention sont consolidés selon le mécanisme commande/moniteur déjà décrit. Ainsi les décisions prises par ces contrôleurs sont fiabilisées et plus particulièrement la sélection du calculateur maître et par conséquent de la commande à appliquer.

Dans l'état de l'art, la loi normale vise à asservir un paramètre de vol de l'avion tel que le facteur de charge, l'assiette, le taux de roulis ou autres à une consigne issue de l'ordre du pilote ou du pilote automatique. Dans le but d'améliorer la précision de ces asservissements, il est mis en place des intégrateurs au sein des chaînes de contrôle des calculateurs, pour annuler l'erreur statique. Chaque unité de calcul réalise son propre asservissement. On appelle une unité de calcul maître de l'asservissement, l'unité unique qui voit son asservissement être effectivement réalisée par l'avion. Pour cette unité, l'ordre qui est calculé est effectué par l'avion et donc l'asservissement est rebouclé et il converge. On appelle une unité esclave de l'asservissement, l'ensemble des unités non-maître dont les asservissements réalisés ne sont pas appliqués à l'avion. Ceux-ci servent seulement à surveiller le maître ou bien à reprendre 'en main' le contrôle de l'avion en cas de panne du maître.

Il peut y avoir des écarts d'entrée d'asservissement, hors panne, entre les unités dus, par exemple, à de l'asynchronisme, à l'échantillonnage, à l'utilisation de sources distinctes. Comme l'asservissement de l'unité esclave n'est pas exécuté, il est en boucle ouverte, et qu'il comporte des intégrateurs, ceux-ci peuvent finir par dériver. Pour pallier à cette divergence des intégrateurs des unités esclaves, ceux-ci sont synchronisés sur les sorties des intégrateurs de l'unité maître. Le gain de la synchronisation est savamment choisi, ni trop faible pour ne pas laisser dériver les sorties et déclencher intempestivement la surveillance, ni trop élevé, le risque étant alors de ne plus détecter la panne lorsqu'elle survient.

Or l'architecture innovante proposée est en profonde rupture par rapport à l'existant. Le mécanisme de synchronisation des intégrateurs doit être adapté à cette nouvelle configuration.

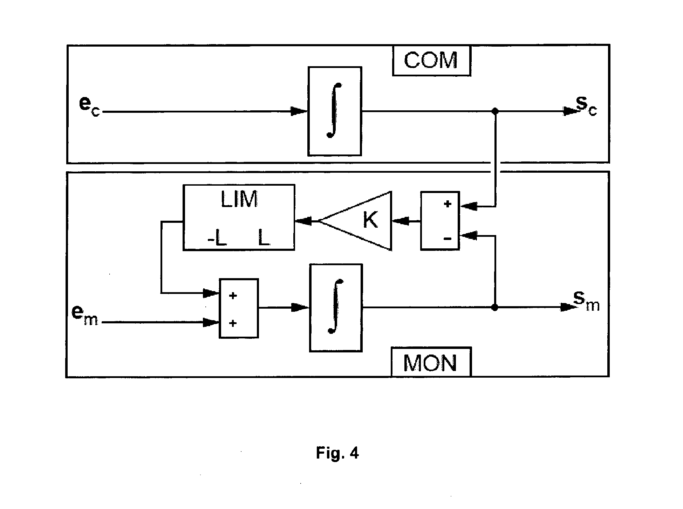

Avantageusement, le calculateur commande du couple maître envoie aux autres calculateurs la sortie de son intégrateur. Les autres calculateurs primaires synchronisent alors leurs propres intégrateurs sur celui du calculateur maître. Cette synchronisation peut être faite, par exemple, selon la méthode connue illustrée à la **Figure 4**. Il faut noter que chaque calculateur calcule une loi normale avec intégrateur pour le compte de deux couples commande/moniteur. Chaque calculateur, dont le calculateur maître maintient donc deux intégrateurs. Les deux intégrateurs doivent être synchronisés avec l'intégrateur du calculateur maître. Particulièrement, l'intégrateur utilisé par le calculateur maître lors de son calcul pour le compte du couple où il joue un rôle de moniteur doit être synchronisé avec l'intégrateur du même calculateur utilisé en mode commande.

Naturellement, pour satisfaire des besoins spécifiques, une personne compétente dans le domaine de l'invention pourra appliquer des modifications dans la description précédente.

## Revendications

1. Calculateur (3.3, 3.6) pour le calcul de commandes de vol au sein d'un système de commande de vol, **caractérisé en ce qu'il** comporte :
- au moins un logiciel pour le calcul de commandes de vol selon au moins une loi de vol à partir d'au moins une commande reçue d'au moins un organe de pilotage;
- des moyens de communication avec au moins deux autres calculateurs associés (3.4, 3.5, 3.7, 3.8) du même type ;
- des moyens de calcul d'un premier ordre de vol, destiné à un contrôleur distant (3.13, 3.15, 3.17) d'un actionneur de gouverne (3.10, 3.11, 3.12), en mode commande au sein d'un premier couple commande/moniteur virtuel constitué dudit calculateur (3.3, 3.6) et d'un des deux calculateurs associés (3.4, 3.7) agissant en mode moniteur pour le compte dudit premier couple commande/moniteur virtuel ;
- des moyens de calcul d'un second ordre de vol, destiné à un contrôleur distant (3.13, 3.15, 3.17) d'un actionneur de gouverne (3.10, 3.11, 3.12), en mode moniteur au sein d'un second couple commande/moniteur virtuel constitué dudit calculateur (3.3, 3.6) et de l'autre calculateur associé (3.5, 3.8) agissant en mode commande pour le compte dudit second couple commande/moniteur virtuel.

2. Calculateur selon la revendication 1, **caractérisé en ce qu'il** comporte en outre des moyens de vérification de la validité des couples commande/moniteur virtuels selon les critères suivants :
- les commandes calculées par les deux calculateurs du couple sont disponibles et calculées selon la même loi de vol ;
- la différence en valeur absolue entre les deux commandes calculées est inférieure à un seuil de tolérance donné.

3. Calculateur selon la revendication 2, **caractérisé en ce que** les moyens de vérification de la validité des couples commande/moniteur virtuels vérifient en outre le critère suivant :
- les deux calculateurs implémentent un logiciel différent pour le calcul des commandes.

4. Calculateur selon l'une des revendications 1 à 3, **caractérisé en ce qu'il** comporte en outre :
- des moyens pour transmettre à tous les autres calculateurs du système, et pour chacun des couples auxquels il participe, son information de validité du couple.

5. Calculateur selon la revendication 4, **caractérisé en ce qu'il** comporte en outre :
- des moyens pour élire un couple maître parmi l'ensemble des calculateurs participant au système de commande de vol.

6. Calculateur selon la revendication 5, **caractérisé en ce que** le couple élu maître est le premier couple valide, c'est-à-dire déterminé comme valide par les deux calculateurs du couple, dans une liste de tous les couples du système rangée selon un ordre de priorité.

7. Calculateur selon l'une des revendications 1 à 6, **caractérisé en ce qu'il** comporte en outre :
- des moyens pour sélectionner un niveau de loi de vol pour le couple comme étant le niveau de loi le plus dégradé des meilleurs niveaux de loi dont sont capables les deux calculateurs du couple.

8. Calculateur selon la revendication 7, **caractérisé en ce qu'il** comporte en outre :
- des moyens pour transmettre le niveau de loi sélectionné pour chacun des couples auxquels il participe à tous les calculateurs ;
et où les moyens d'élection sont adaptés pour élire comme couple maître le premier couple ayant la loi la moins dégradée dans une liste de tous les couples du système rangée selon un ordre de priorité.

9. Calculateur selon l'une des revendications 1 à 8, **caractérisé en ce qu'il** comporte en outre :
- des moyens de reconfiguration logicielle pour basculer d'un premier logiciel à un second logiciel différent pour le calcul des commandes de vol.

10. Calculateur selon l'une des revendications 1 à 9, **caractérisé en ce qu'il** comporte en outre :
- s'il est le calculateur agissant en mode commande du couple élu maître, des moyens de transmettre les commandes calculées à l'ensemble des calculateurs ;
- des moyens pour retransmettre à destination du contrôleur distant contrôlant un actionneur, les commandes reçues calculées par le calculateur agissant en mode commande du couple élu maître.

11. Calculateur selon l'une des revendications 1 à 9, **caractérisé en ce qu'il** comporte en outre :
- s'il est le calculateur agissant en mode commande du couple élu maître, des moyens de transmettre la sortie (Sc) d'un intégrateur utilisé pour le calcul de la loi normale ;
- des moyens pour synchroniser les intégrateurs utilisés pour le calcul de la loi normale en mode commande pour un couple non élu maître ou en mode moniteur sur la valeur de l'intégrateur du calculateur agissant en mode commande du couple élu maître.

12. Système de commande de vol **caractérisé en ce qu'**il comporte un ensemble d'au moins trois calculateurs (3.3, 3.4, 3.5, 3.6, 3.7, 3.8) selon l'une des revendications 1 à 11 et au moins un contrôleur (3.13, 3.15, 3.17) d'un actionneur de gouverne (3.10, 3.11, 3.12), tel que ledit contrôleur d'un actionneur de gouverne comporte :
- des moyens pour recevoir de chaque calculateur de l'ensemble de calculateurs, la commande calculée par ledit calculateur et le résultat de l'élection d'un couple comme couple maître ;
- des moyens pour déterminer, parmi les résultats d'élection reçus, le couple maître vu par ledit contrôleur ;
- des moyens pour appliquer à la gouverne la commande calculée par le calculateur agissant en mode commande au sein du couple maître vu par ledit contrôleur.

13. Système de commande de vol selon la revendication 12, **caractérisé en ce que** les moyens de détermination du couple maître vu par ledit contrôleur comportent des moyens pour sélectionner le couple maître le plus souvent cité dans les résultats d'élection reçus par le contrôleur, un ordre de priorité départageant d'éventuels ex-aequo.

14. Système de commande de vol selon l'une des revendications 12 ou 13, **caractérisé en ce que** ledit au moins un contrôleur d'un actionneur de gouverne comporte en outre :
- des moyens pour recevoir les commandes calculées par le calculateur agissant en mode commande au sein du couple maître de la part de chacun des calculateurs ;
- des moyens pour appliquer à l'actionneur la commande ainsi reçue de l'un des autres calculateurs en cas de perte de connexion avec le calculateur agissant en mode commande au sein du couple maître.

15. Système de commande de vol selon la revendication 14, **caractérisé en ce que** la commande appliquée par ledit au moins un contrôleur d'un actionneur de gouverne est la valeur médiane des commandes ainsi reçues des autres calculateurs en cas de perte de connexion avec le calculateur agissant en mode commande au sein du couple maître.

16. Système de commande de vol selon l'une des revendications 12 à 15, **caractérisé en ce que** ledit au moins un contrôleur d'un actionneur de gouverne comporte deux unités ((3.13, 3.14), (3.15, 3.16), (3.17, 3.18)) formant un couple commande/moniteur.

17. Avion **caractérisé en ce qu'**il comporte un système de commande de vol selon l'une des revendications 12 à 16.

## Patentansprüche

1. Rechner (3.3, 3.6) zur Berechnung von Flugsteuerungen in einem Flugsteuerungssystem, **dadurch gekennzeichnet, dass** er Folgendes aufweist:
- mindestens eine Software für die Berechnung von Flugsteuerungen gemäß mindestens einem Flugbetriebszustand ausgehend von mindestens einer Steuerung, die von mindestens einem Steuerorgan empfangen wird;
- Mittel zur Kommunikation mit mindestens zwei anderen zugehörigen Rechnern (3.4, 3.5, 3.7, 3.8) desselben Typs;
- Mittel zur Berechnung eines ersten Flugbefehls, der für eine Fernsteuereinrichtung (3.13, 3.15, 3.17) eines Ruderstellglieds (3.10, 3.11, 3.12) im Steuerungsmodus in einem ersten virtuellen Steuerung/Überwachungseinrichtungspaar bestimmt ist, das aus dem Rechner (3.3, 3.6) und aus einem der zwei zugehörigen Rechner (3.4, 3.7) gebildet ist, der für das erste virtuelle Steuerung/Überwachungseinrichtungspaar im Überwachungsmodus wirkt;
- Mittel zur Berechnung eines zweiten Flugbefehls, der für eine Fernsteuereinrichtung (3.13, 3.15, 3.17) eines Ruderstellglieds (3.10, 3.11, 3.12) im Überwachungsmodus in einem zweiten virtuellen Steuerung/Überwachungseinrichtungspaar bestimmt ist, das aus dem Rechner (3.3, 3.6) und dem anderen zugehörigen Rechner (3.5, 3.8) gebildet ist, der für das zweite virtuelle Steuerung/Überwachungseinrichtungspaar im Steuerungsmodus wirkt.

2. Rechner nach Anspruch 1, **dadurch gekennzeichnet, dass** er ferner Mittel zur Überprüfung der Gültigkeit d e r virtuellen Steuerung/Überwachungseinrichtungspaare gemäß den folgenden Kriterien aufweist:
- die durch die zwei Rechner des Paares berechneten Steuerungen sind verfügbar und gemäß demselben Flugbetriebszustand berechnet;
- die Differenz zwischen den zwei berechneten Steuerungen als Absolutwert ist kleiner als eine gegebene Toleranzschwelle.

3. Rechner nach Anspruch 2, **dadurch gekennzeichnet, dass** die Mittel zur Überprüfung der Gültigkeit der virtuellen Steuerung/Überwachungseinrichtungspaare ferner das folgende Kriterium überprüfen:
- die zwei Rechner führen eine unterschiedliche Software für die Berechnung der Steuerungen aus.

4. Rechner nach einem der Ansprüche 1 bis 3, **dadurch gekennzeichnet, dass** er ferner Folgendes aufweist:
- Mittel zum Übermitteln seiner Information über die Gültigkeit des Paares an alle anderen Rechner des Systems und für jedes der Paare, an dem er teilnimmt.

5. Rechner nach Anspruch 4, **dadurch gekennzeichnet, dass** er ferner Folgendes aufweist:
- Mittel zum Wählen eines Hauptpaares unter der Menge von Rechnern, die am Flugsteuerungssystem teilnehmen.

6. Rechner nach Anspruch 5, **dadurch gekennzeichnet, dass** das gewählte Hauptpaar das erste gültige, das heißt durch die zwei Rechner des Paares als gültig bestimmte Paar in einer Liste von allen Paaren des Systems ist, die nach einer Prioritätenordnung geordnet ist.

7. Rechner nach einem der Ansprüche 1 bis 6, **dadurch gekennzeichnet, dass** er ferner Folgendes aufweist:
- Mittel zum Auswählen einer Flugbetriebszustandsstufe für das Paar als die am meisten degradierte Betriebszustandsstufe der besten Betriebszustandsstufen, für die die zwei Rechner des Paares in der Lage sind.

8. Rechner nach Anspruch 7, **dadurch gekennzeichnet, dass** er ferner Folgendes aufweist:
- Mittel zum Übermitteln der Betriebszustandsstufe, die für jedes der Paare, an denen er teilnimmt, ausgewählt wurde, an alle Rechner;
und wobei die Wahlmittel angepasst sind, um als Hauptpaar das erste Paar zu wählen, das in einer Liste von allen Paaren des Systems, die nach einer Prioritätenordnung geordnet ist, den am wenigsten degradierten Betriebszustand aufweist.

9. Rechner nach einem der Ansprüche 1 bis 8, **dadurch gekennzeichnet, dass** er ferner Folgendes aufweist:
- Mittel zur Software-Rekonfiguration zum Umschalten von einer ersten Software zu einer zweiten, unterschiedlichen Software für die Berechnung der Flugsteuerungen.

10. Rechner nach einem der Ansprüche 1 bis 9, **dadurch gekennzeichnet, dass** er ferner Folgendes aufweist:
- wenn er der Rechner des gewählten Hauptpaares ist, der im Steuerungsmodus wirkt, Mittel zum Übermitteln der berechneten Steuerungen an sämtliche Rechner;
- Mittel zum Weitergeben der empfangenen Steuerungen, die durch den Rechner des gewählten Hauptpaares berechnet wurden, der im Steuerungsmodus wirkt, zur Fernsteuereinrichtung, die ein Stellglied steuert.

11. Rechner nach einem der Ansprüche 1 bis 9, **dadurch gekennzeichnet, dass** er ferner Folgendes aufweist:
- wenn er der Rechner des gewählten Hauptpaares ist, der im Steuerungsmodus wirkt, Mittel zum Übermitteln des Ausgangs (Sc) eines Integrators, der für die Berechnung des normalen Betriebszustands (Normal Law) verwendet wird;
- Mittel zum Synchronisieren der Integratoren, die für die Berechnung des normalen Betriebszustands (Normal Law) im Steuerungsmodus für ein nicht zum Hauptpaar gewähltes Paar oder im Überwachungsmodus verwendet werden, auf den Wert des Integrators des Rechners des gewählten Hauptpaares, der im Steuerungsmodus wirkt.

12. Flugsteuerungssystem, **dadurch gekennzeichnet, dass** es eine Menge von mindestens drei Rechnern (3.3, 3.4, 3.5, 3.6, 3.7, 3.8) nach einem der Ansprüche 1 bis 11 und mindestens eine Steuereinrichtung (3.13, 3.15, 3.17) eines Ruderstellglieds (3.10, 3.11, 3.12) aufweist, derart, dass die Steuereinrichtung eines Ruderstellglieds Folgendes aufweist:
- Mittel zum Empfangen der durch den Rechner berechneten Steuerung und des Ergebnisses der Wahl eines Paares als Hauptpaar von jedem Rechner von der Menge von Rechnern;
- Mittel zum Bestimmen des durch die Steuereinrichtung gesehenen Hauptpaares unter den empfangenen Wahlergebnissen;
- Mittel zum Anwenden der Steuerung, die durch den Rechner berechnet wurde, der innerhalb des durch die Steuereinrichtung gesehenen Hauptpaares im Steuerungsmodus wirkt, auf das Ruder.

13. Flugsteuerungssystem nach Anspruch 12, **dadurch gekennzeichnet, dass** die Mittel zur Bestimmung des durch die Steuereinrichtung gesehenen Hauptpaares Mittel zum Auswählen des in den durch die Steuereinrichtung empfangenen Wahlergebnissen am häufigsten erwähnten Hauptpaares aufweisen, wobei eine Prioritätenordnung gegebenenfalls bei Gleichheit eine Entscheidung herbeiführt.

14. Flugsteuerungssystem nach einem der Ansprüche 12 oder 13, **dadurch gekennzeichnet, dass** die mindestens eine Steuereinrichtung eines Ruderstellglieds ferner Folgendes aufweist:
- Mittel zum Empfangen von Steuerungen, die durch den Rechner berechnet wurden, der innerhalb des Hauptpaares im Steuerungsmodus wirkt, von jedem der Rechner;
- Mittel zum Anwenden der so von einem der anderen Rechner empfangenen Steuerung auf das Stellglied, im Falle des Verlusts der Verbindung mit dem Rechner, der innerhalb des Hauptpaares im Steuerungsmodus wirkt.

15. Flugsteuerungssystem nach Anspruch 14, **dadurch gekennzeichnet, dass** die durch die mindestens eine Steuereinrichtung eines Ruderstellglieds angewandte Steuerung der Medianwert der Steuerungen ist, die so von den anderen Rechnern im Falle des Verlusts der Verbindung mit dem Rechner, der innerhalb des Hauptpaares im Steuerungsmodus wirkt, empfangen werden.

16. Flugsteuerungssystem nach einem der Ansprüche 12 bis 15, **dadurch gekennzeichnet, dass** die mindestens eine Steuereinrichtung eines Ruderstellglieds zwei Einheiten ((3.13, 3.14), (3.15, 3.16), (3.17, 3.18)) aufweist, die ein Steuerung/Überwachungseinrichtungspaar bilden.

17. Flugzeug, **dadurch gekennzeichnet, dass** es ein Flugsteuerungssystem nach einem der Ansprüche 12 bis 16 aufweist.

## Claims

1. Computer (3.3, 3.6) for computing flight commands within a flight control system, **characterized in that** it comprises:
- at least one item of software for computing flight commands according to at least one flight law on the basis of at least one command received from at least one piloting member;
- means of communication with at least two other associated computers (3.4, 3.5, 3.7, 3.8) of the same type;
- means for computing a first flight order, intended for a remote controller (3.13, 3.15, 3.17) of an aerofoil actuator (3.10, 3.11, 3.12), in command mode within a first virtual command/monitor pair consisting of said computer (3.3, 3.6) and of one of the two associated computers (3.4, 3.7) acting in monitor mode on behalf of said first virtual command/monitor pair;
- means for computing a second flight order, intended for a remote controller (3.13, 3.15, 3.17) of an aerofoil actuator (3.10, 3.11, 3.12), in monitor mode within a second virtual command/monitor pair consisting of said computer (3.3, 3.6) and of the other associated computer (3.5, 3.8) acting in command mode on behalf of said second virtual command/monitor pair.

2. Computer according to Claim 1, **characterized in that** it furthermore comprises means for verifying the validity of the virtual command/monitor pairs according to the following criteria:
- the commands computed by the two computers of the pair are available and computed according to the same flight law;
- the difference in absolute value between the two commands computed is less than a given tolerance threshold.

3. Computer according to Claim 2, **characterized in that** the means for verifying the validity of the virtual command/monitor pairs furthermore verify the following criterion:
- the two computers implement a different item of software for the computation of the commands.

4. Computer according to one of Claims 1 to 3, **characterized in that** it furthermore comprises:
- means for transmitting to all the other computers of the system, and for each of the pairs in which it p a rticipates, its information regarding validity of the pair.

5. Computer according to Claim 4, **characterized in that** it furthermore comprises:
- means for electing a master pair from among the set of computers participating in the flight control system.

6. Computer according to Claim 5, **characterized in that** the pair elected master is the first valid pair, that is to say determined as valid by the two computers of the pair, in a list of all the pairs of the system, ranked in an order of priority.

7. Computer according to one of Claims 1 to 6, **characterized in that** it furthermore comprises:
- means for selecting a level of flight law for the pair as being the most degraded level of law of the best levels of law of which the two computers of the pair are capable.

8. Computer according to Claim 7, **characterized in that** it furthermore comprises:
- means for transmitting the level of law selected for each of the pairs in which it participates to all the computers;
and where the means of election are adapted for electing as master pair the first pair having the least degraded law in a list of all the pairs of the system, ranked in an order of priority.

9. Computer according to one of Claims 1 to 8, **characterized in that** it furthermore comprises:
- means of software reconfiguration for switching from a first item of software to a second different item of software for the computation of the flight commands.

10. Computer according to one of Claims 1 to 9, **characterized in that** it furthermore comprises:
- if it is the computer acting in command mode of the pair elected master, means for transmitting the commands computed to the whole set of computers;
- means for retransmitting to the remote controller controlling an actuator, the commands received calculated by the computer acting in command mode of the pair elected master.

11. Computer according to one of Claims 1 to 9, **characterized in that** it furthermore comprises:
- if it is the computer acting in command mode of the pair elected master, means for transmitting the output (Sc) of an integrator used for the computation of the normal law;
- means for synchronizing the integrators used for the computation of the normal law in command mode for a pair not elected master or in monitor mode to the value of the integrator of the computer acting in command mode of the pair elected master.

12. Flight control system **characterized in that** it comprises a set of at least three computers (3.3, 3.4, 3.5, 3.6, 3.7, 3.8) according to one of Claims 1 to 11 and at least one controller (3.13, 3.15, 3.17) of an aerofoil actuator (3.10, 3.11, 3.12) such that said controller of an aerofoil actuator comprises:
- means for receiving from each computer of the set of computers the command computed by said computer and the result of the election of a pair as master pair;
- means for determining, from among the election results received, the master pair viewed by said controller;
- means for applying to the aerofoil the command computed by the computer acting in command mode within the master pair viewed by said controller.

13. Flight control system according to Claim 12, **characterized in that** the means for determining the master pair viewed by said controller comprise means for selecting the master pair most often cited in the election results received by the controller, an order of priority deciding between possible ex-æquo.

14. Flight control system according to either of Claims 12 and 13, **characterized in that** said at least one controller of an aerofoil actuator furthermore comprises:
- means for receiving the commands computed by the computer acting in command mode within the master pair on the part of each of the computers;
- means for applying to the actuator the command thus received from one of the other computers in case of loss of connection with the computer acting in command mode within the master pair.

15. Flight control system according to Claim 14, **characterized in that** the command applied by said at least one controller of an aerofoil actuator is the median value of the commands thus received from the other computers in case of loss of connection with the computer acting in command mode within the master pair.

16. Flight control system according to one of Claims 12 to 15, **characterized in that** said at least one controller of an aerofoil actuator comprises two units ((3.13, 3.14), (3.15, 3.16), (3.17, 3.18)) forming a command/monitor pair.

17. Aircraft **characterized in that** it comprises a flight control system according to one of Claims 12 to 16.
